# EUROPEAN PATENT SPECIFICATION

(11) **EP 3 582 950 B1**
(45) Date of publication and mention of the grant of the patent: **30.03.2022**
(21) Application number: 17915550.2
(22) Date of filing: 27.06.2017
(51) Int. Cl.: B29C 64/245, F16J 15/322, B33Y 30/00, F16J 15/3268, F16J 15/3228, F16J 15/3208

(54) **TWO-PART PLATFORM SEAL**
ZWEITEILIGE PLATTFORMDICHTUNG
JOINT DE PLATE-FORME EN DEUX PARTIES

(43) Date of publication of application: 25.12.2019
(73) Proprietor: Hewlett-Packard Development Company, L.P., Spring TX 77389 (US)
(72) Inventor: SCHMALE, Joshua, Vancouver, Washington 98683 (US); DRIGGERS, Matt G., Vancouver, Washington 98683 (US)
(74) Representative: Bryers LLP
(86) International application number: PCT/US2017/039432
(87) International publication number: WO 2019/005006

(56) References cited:
- WO-A2-2016/085334
- CN-U- 205 310 832
- JP-A- H0 885 039
- JP-A- 2005 246 490
- US-A1- 2016 059 308

## Description

### BACKGROUND

Powder-based three-dimensional (3-D) printers may use a moving platform sealed against a stationary enclosure, creating a volume from which powder cannot escape. Some systems use single part seals made of rubber or synthetic elastomers with high frictional forces, felt seals that may become impregnated with powder and lose their ability to seal, or solid seals like automotive O-rings that have precise manufacturing tolerances.

JP 2005 246490 A describes a protective cover for a moving part of a machine tool which can prevent the intrusion of cutting chips or the like into a moving part of the machine tool.

WO 2016/085334 A2 describes an apparatus comprising a process chamber for receiving a bath of material, a support for positioning an object in relation to the surface level of the bath of material, and a solidifying device for solidifying a layer of the material on the surface level by means of electromagnetic radiation.

JP H08 85039 A describes a wiper with a lip that closes a gap between relatively moving covers of a machine tool to prevent the ingress of chips and cutting fluid.

### BRIEF DESCRIPTION OF THE DRAWINGS

For a more complete understanding of various examples, reference is now made to the following description taken in connection with the accompanying drawings in which:
Figure 1 illustrates an example 3-D printer platform assembly incorporating a two-part platform seal;
Figure 2 is an exploded cross-section of Figure 1 illustrating example elements of a two-part platform seal;
Figure 3 is an exploded cross-section of Figure 1 illustrating example elements of a corner platform seal;
Figure 4 illustrates an example flexible film wiper of a two-part platform seal;
Figure 5 illustrates an example of a deformable member of a two-part platform seal;
Figure 6 is a side view of the deformable member of Figure 4 illustrating strain relief notches in the deformable member of the two-part platform seal of Figure 4;
Figure 7 is a cross-sectional view illustrating an example of a two-part platform seal in an un-deformed condition;
Figure 8 is a cross-sectional view illustrating an example of a two-part platform seal in a deformed, sealing configuration;
Figure 9 is a graph illustrating an example of sealing force versus displacement of a two-part seal in a first direction;
Figure 10 is a graph illustrating an example of sealing force versus displacement of a two-part seal in a second direction;
Figure 11 illustrates an example of a 3-D printer platform assembly incorporating a two-part platform seal with alignment and clamping features; and
Figure 12 is a flowchart illustrating an example method for forming a two-part platform seal.

### DETAILED DESCRIPTION

Various examples illustrate a platform assembly for a powder-based 3-D printer to provide a two-part seal between the platform assembly and the enclosure of the printer's build volume, to prevent powder from escaping from the enclosure. The two-part seal includes a flexible film wiper to provide a sliding seal against the walls of the enclosure, and a deformable member on top of the flexible film wiper to increase the pressure of the sliding seal against the walls of the enclosure. In some examples, the platform assembly includes clamping members to clamp the flexible film wiper and the deformable member to the base of the platform assembly. In one example, the deformable member includes corner elements in direct contact with the corners of the enclosure to provide sliding corner seals between the corners of the platform and the corners of the enclosure.

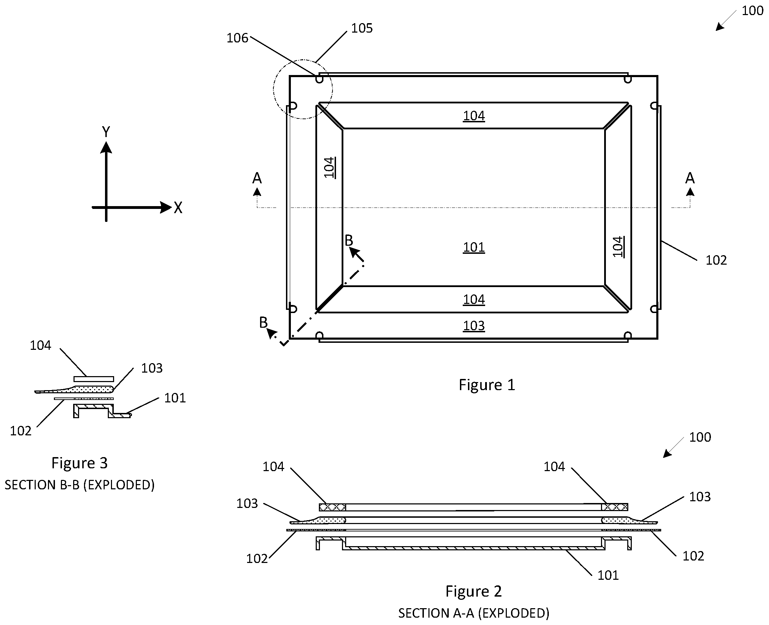

Referring now to the figures, Figure 1 illustrates an example platform assembly 100 incorporating a two-part sealing structure, Figure 2 illustrates an exploded transverse cross-section of the assembly 100, and Figure 3 illustrates an exploded cross-section of a corner of the platform assembly 100. The example platform assembly 100 includes a rectangular platform 101, which may have a cross-section as illustrated or any other cross-section that may provide the rigidity and stability for a movable platform in a 3-D printer. In some examples, platform 101 may be fabricated by forming, stamping, machining or any other suitable manufacturing process. In some examples, the platform 101 may be fabricated from aluminum, sheet metal, stainless steel or the like, or any combination thereof.

The example platform assembly 100 also includes a non-compressible flexible film wiper 102 disposed on the platform 101 and around the perimeter thereof, exclusive of the corners of platform 101. As illustrated in Figures 1 and 2, the flexible film wiper 102 extends beyond the perimeter of the platform 101 on the four sides of the platform 101. As illustrated in Figure 3, the flexible film wiper does not extend into the corners of the platform assembly 100. In one example, the flexible film wiper 102 may be fabricated from a sheet of polyimide (e.g., Kapton^{®} manufactured by Dupont) having a thickness in the range of approximately 0.05 millimeters to approximately 0.3 millimeters. In other examples, the flexible film wiper may be fabricated from other high-performance plastics such as PEK (polyetherketone) polymers PTFE (polytetrafluoroethylene, e.g., Teflon^{®} manufactured by Dupont), or aliphatic or semi-aromatic polyamides such as nylon, for example. These, and all similar materials possess smooth, relatively hard surfaces with relatively low coefficients of sliding friction, as discussed in greater detail below. Additionally, these materials may all be manufactured using low-cost die-cutting methods.

The example platform assembly 100 also includes a deformable member 103 disposed on the flexible film wiper 102 and around the perimeter of the platform 101. As illustrated in Figures 1 and 2, the deformable member 103 extends beyond the perimeter of the platform 101, but not as far as the extent of the flexible film wiper 102, as discussed in greater detail below. Additionally, in the example illustrated in Figure 1, the deformable member 103 includes corner elements 105 where the flexible film wiper 102 is not present. In one example, as illustrated in Figure 1, the corners of the corner elements 105 may be sharp corners. In other examples, the corners of the corner elements 105 may be rounded. In one example, the corner elements 105 each include a pair of strain relief notches 106 to provide mechanical isolation between the corner elements 105 and other portions of the deformable member 103 as described in greater detail below. In one example, the deformable member 103 may be fabricated from a compressible flouroelastomer material such as Viton^{®}, a brand of synthetic rubber and fluoropolymer elastomer manufactured The Chemours Company. In other examples, the deformable member 103 may be fabricated from other compressible materials such as silicone or natural or synthetic rubber, or the like. In various examples, the deformable member 103 may be formed in a mold as a compressible solid or foam. In various examples, the deformable member 103 may have a Shore hardness in the range of approximately 20 to approximately 60.

The example platform assembly 100 also includes clamping members 104 disposed upon the deformable member 103 around the perimeter of the platform 101, to apply a compressive force to the deformable member 103 and the flexible film wiper 102 against the platform 101. In one example, the clamping members 104 may be fabricated from aluminum, stainless steel, sheet metal or like material. In one example, the clamping members may be manufactured from bar stock by a series of simple diagonal cuts as illustrated by the shape of the clamping elements in Figure 1. In some examples, as described in greater detail below, the clamping elements may include features such as alignment holes or slots (not shown) to engage with corresponding alignment and clamping elements of the platform assembly 100.

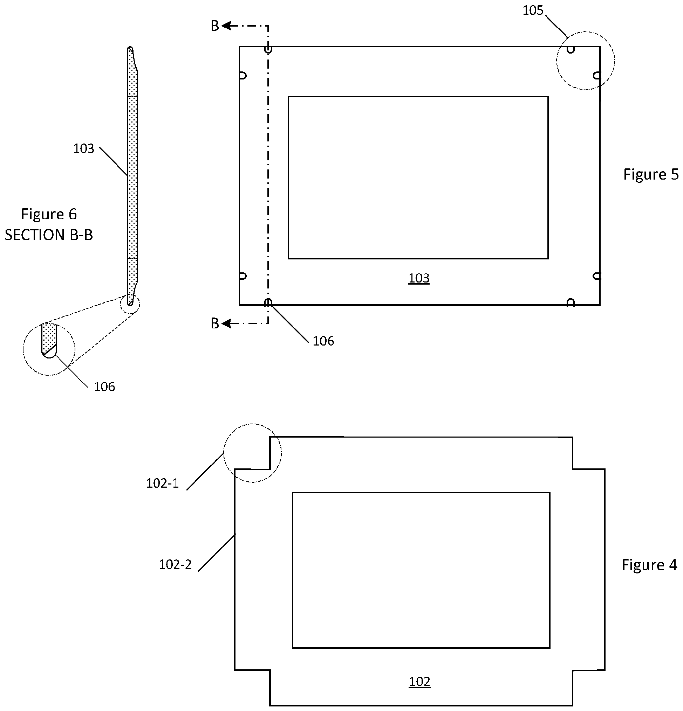

Turning now to Figures 4-6, there are illustrated two of the separate components of the platform assembly 100. Figure 4 illustrates an example of the flexible film wiper 102, Figure 5 illustrates an example of the deformable member 103, and Figure 6 illustrates a sectional view of Figure 5. As illustrated in Figure 4, the example flexible film wiper 102 may be fabricated as a single, rectangular sheet with corner cutouts 102-1 and edge elements 102-2. It will be appreciated that the corner cutouts 102-1 will allow the edge elements 102-2 to flex independently of each other. As illustrated in Figure 5, the example deformable member 103 may also be formed (e.g., molded) as a single piece of material. Figure 6 illustrates the details of the strain relief notches 106. It will be appreciated that the strain relief notches 106 reduce the cross-sectional thickness of the example deformable member 103, at the boundaries of the corner elements 105, without breaking the integrity of the perimeter of the deformable member 103, which isolates the corner elements 105 of the deformable member 103without providing a path for the escape of powder the build volume of a 3-D printer.

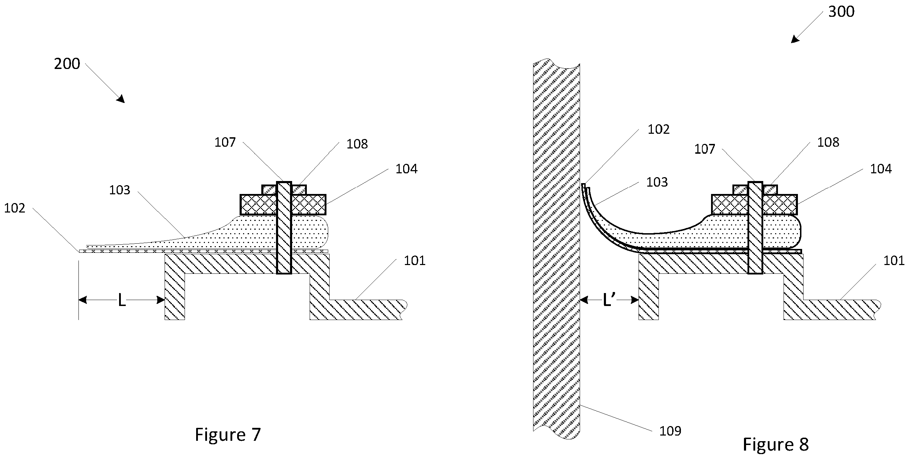

Figure 7 illustrates a partial cross-section 200 of the example platform assembly 100 with a two-part seal in an undeformed (i.e., as-built) condition, with additional features to illustrate an example clamping mechanism. The partial cross-section 200 includes a post 107 engaged with the platform 101. For example, the post 107 may be threaded into or press-fitted into the platform 101. Post 107 may be threaded to engage with fastener 108, which may be a threaded nut or cap screw, for example. It will be appreciated that when the fastener 108 is engaged with the post 107, a compressive force will be transmitted through the clamping element 104 to the deformable member 103 and the flexible film wiper 102, thereby bringing the flexible film wiper 102 and the deformable member 103 into intimate contact to form the elements of a two-part seal. As illustrated in Figure 7, the flexible film wiper 102 extends a distance L beyond the perimeter of the platform 101, while the deformable member 103 extends to a length less than L beyond the perimeter of the platform 101.

Figure 8 illustrates a partial cross-section 300 of the example platform assembly 100 with a two-part seal in a deformed sealing condition against a wall 109 of an enclosure of a 3-D printer's build volume. As illustrated in Figure 8, the platform 101 is separated by a distance L' that is less than the distance L in the un-deformed condition illustrated in Figure 7. In one example, the distance L' may be on the order of approximately 2.5 millimeters (mm) while the distance L may be on the order of approximately 4 mm to approximately 10 mm. The two-part seal formed between the platform 101 and the enclosure wall 109 by flexible film wiper 102 and deformable member 103 provides a low-friction sliding seal between the enclosure wall 109 and the flexible film wiper 103, augmented by pressure applied by the deformable member 103 without increasing friction. Additionally, the non-compressible flexible film wiper 102 provides an edge that continuously wipes clean the enclosure wall 109 when the platform assembly moves during the 3-D printing process. It will be appreciated that this wiping action preserves the integrity of the seal over time and may serve to extend service intervals.

It will also be appreciated that the seal geometry described herein, allowing a gap on the order of millimeters between the platform 101 and the walls of the 3-D print volume enclosure (represented by enclosure wall 109 in Figure 8), permits relatively loose manufacturing tolerances and an associated reduction in manufacturing costs.

Returning now to Figure 3, which illustrates an example corner portion of the platform assembly 100, it can be appreciated that when the corners 105 of the platform assembly 101 engage the internal corners of a printer enclosure, the deformable member 103 will be in direct contact with the enclosure. The strain relief notches 106 in the deformable member 103 allow the corners of the deformable material to conform to the corners of the enclosure and to provide a powder seal at the corners.

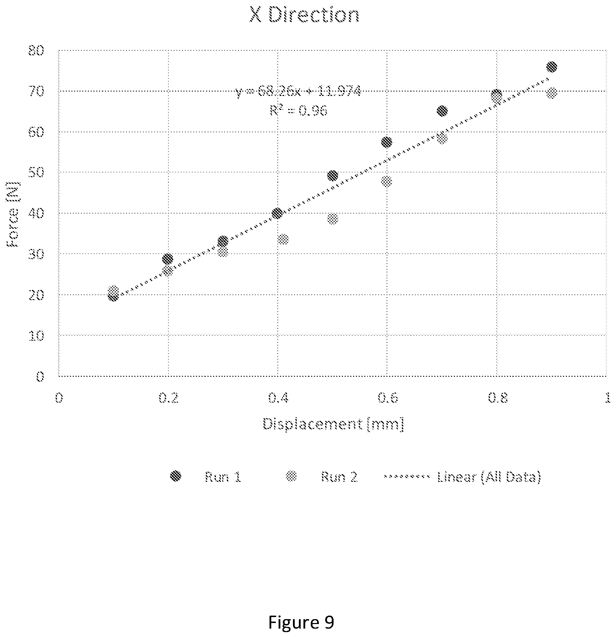

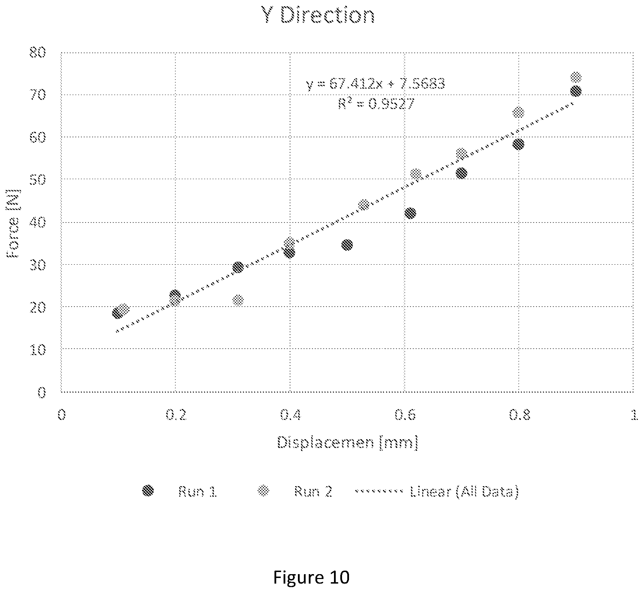

Figure 9 and Figure 10 are non-limiting examples of force versus displacement data for two-part platform seals as illustrated in Figure 7, corresponding to displacements in the X and Y dimensions of a rectangular platform assembly such as platform assembly 100 illustrated in Figure 1. As shown in the example of Figure 9 for the X dimension, the two-part seal provides an initial sealing force of approximately 12 Newtons, increasing by approximately 68 Newtons per millimeter of displacement based on a least-squares fit to the data. As shown in the example of Figure 10 for the y dimension, the two-part seal provides an initial sealing force of approximately 7.5 Newtons, increasing by approximately 67 Newtons per millimeter of displacement based on a least-squares fit to the data. These forces operate to keep the platform assembly centered in the enclosure during operation. The deformable member 103 may be designed with higher or lower force change per millimeter of displacement to suit a particular design or enclosure geometry.

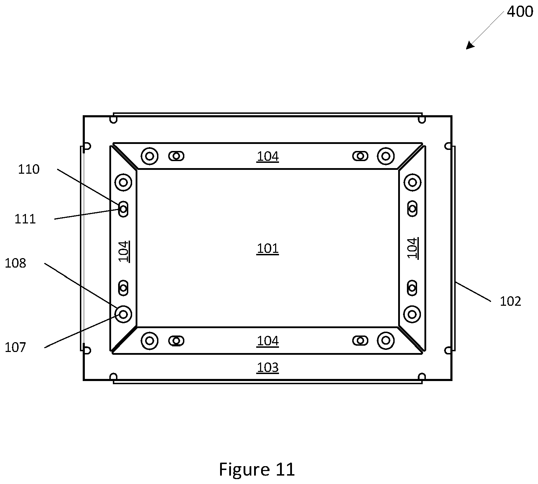

Figure 11 illustrates an example of a 3-D printer platform assembly 400 including alignment and clamping elements. As illustrated in Figure 11, each of the clamping bars 104 includes slots 110 to accept alignment pins 111, where the alignment pins may be pressed or threaded into the platform 101. The flexible film wiper 102 and the deformable member 103 will have corresponding slots to provide alignment of those components. Also illustrated in Figure 10 are the threaded posts 107 and threaded fasteners described above with respect to Figure 7.

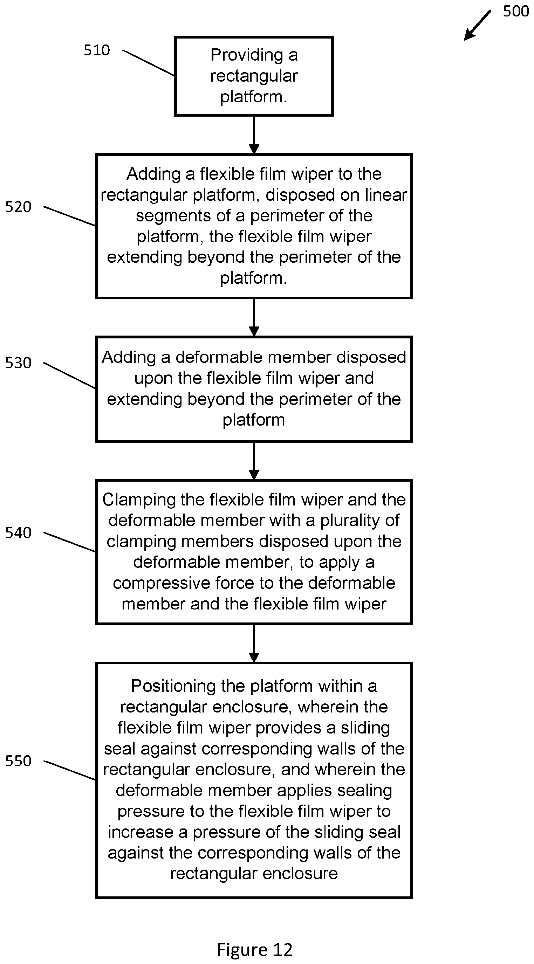

Referring now to Figure 12, a flow chart illustrates an example method 500 for forming a two-part seal between a moving platform and an enclosure of a powder-based 3-D printer. The example method 500 includes providing a rectangular platform, such as platform 101 (operation 510). The example method 500 further includes adding a flexible film wiper to the rectangular platform, such as flexible film wiper 102, disposed on linear segments of a perimeter of the platform, the flexible film wiper extending beyond the perimeter of the platform (operation 520). The example method 500 also includes adding a deformable member, such as deformable member 103, disposed upon the flexible film wiper and extending beyond the perimeter of the platform (operation 530). Additionally, example method 500 includes clamping the flexible film wiper and the deformable member with a plurality of clamping members, such as clamping members 104, disposed upon the deformable member, to apply a compressive force to the deformable member and the flexible film wiper (operation 540). Finally, example method 500 includes positioning the platform within a rectangular enclosure, wherein the flexible film wiper provides a sliding seal against corresponding walls of the rectangular enclosure, and wherein the deformable member applies sealing pressure to the flexible film wiper to increase a pressure of the sliding seal against the corresponding walls of the rectangular enclosure.

Thus, in accordance with various examples described herein, a two-part platform seal may be used to facilitate the sealing of a build volume in a powder-based 3-D printer. The two-part seal may include a low-friction, flexible film wiper for direct contact with the walls of the build chamber, and a deformable member to apply additional sealing pressure.

The foregoing description of various examples has been presented for purposes of illustration and description. The foregoing description is not intended to be exhaustive or limiting to the examples disclosed, and modifications and variations are possible in light of the above teachings or may be acquired from practice of various examples. The examples discussed herein were chosen and described in order to explain the principles and the nature of various examples of the present disclosure and its practical application to enable one skilled in the art to utilize the present disclosure in various examples and with various modifications as are suited to the particular use contemplated. The features of the examples described herein may be combined in all possible combinations of methods, apparatus and systems.

It is also noted herein that while the above describes examples, these descriptions should not be viewed in a limiting sense. Rather, there are several variations and modifications which may be made without departing from the scope as defined in the appended claims.

## Claims

1. A system, comprising:
a movable platform assembly (100), comprising:
a rectangular platform (101);
a flexible film wiper (102) attached to the rectangular platform and disposed on linear segments of a perimeter of the platform, the flexible film wiper extending beyond the perimeter;
a deformable member (103) disposed upon the flexible film wiper and extending beyond the perimeter of the platform, the deformable member to apply sealing pressure to the flexible film wiper; and
clamping members (104) disposed upon the deformable member to apply a compressive force to the deformable member and the flexible film wiper; and
a fixed rectangular enclosure of a powder-based 3-D printer to accommodate the moving platform assembly, the flexible film wiper to provide a sliding seal against corresponding walls of the rectangular enclosure, wherein the flexible film wiper and the deformable member provide a two-part seal between the platform and the enclosure.

2. The system of claim 1, wherein a thickness of the deformable member decreases from the perimeter of the platform towards an edge of the deformable member.

3. The system of claim 1, wherein the deformable member has a Shore hardness in the range of approximately 20 to approximately 60.

4. The system of claim 1, wherein the deformable member comprises corner elements (105) to be in direct contact with corresponding corners of the rectangular enclosure, the corner elements to provide sliding corner seals between corners of the rectangular platform and the corresponding corners of the rectangular enclosure.

5. The system of claim 4, wherein the corner elements include strain relief notches (106) to mechanically isolate the corner elements from linear segments of the deformable member.

6. The system of claim 4, wherein the corners elements are rounded.

7. The system of claim 1, wherein the flexible film wiper comprises a low-friction, non-compressible material.

8. The system of claim 7, wherein the low-friction, non-compressible material comprises one of a polyimide, a PEK polymer, polytetrafluoroethylene, or an aliphatic or semi-aromatic polyamide.

9. The system of claim 8, wherein a thickness of the flexible film wiper is in the range of approximately 0.05 mm to approximately 0.3 mm.

10. The system of claim 1, wherein the deformable material comprises one of silicone, a flouroelastomer, or natural or synthetic rubber.

11. The system of claim 1, wherein the rectangular platform comprises guide pins and threaded posts (107), wherein the flexible film wiper and the deformable member include apertures corresponding to the guide pins and the threaded posts, the apparatus further comprising clamping bars with apertures to accommodate the guide pins and the threaded posts, the clamping bars to provide clamping force to the deformable member and the flexible film wiper when nuts are threaded on the threaded posts.

12. The system of claim 1, wherein the flexible film wiper in an un-deformed condition extends a distance L beyond the perimeter of the platform and the deformable member extends to a length less than L beyond the perimeter of the platform.

13. The system of claim 12, wherein the platform is separated by a distance L' from the enclosure, wherein the distance L' is less than the distance L in the un-deformed condition.

14. The system of claim 13, wherein the distance L is on the order of approximately 4 mm to approximately 10 mm and the distance L' is on the order of approximately 2.5 mm.

15. A method (500) comprising:
providing (510) a rectangular platform (101);
adding (520) a flexible film wiper (102) to the rectangular platform, disposed on linear segments of a perimeter of the platform, the flexible film wiper extending beyond the perimeter of the platform;
adding (530) a deformable member (103) disposed upon the flexible film wiper and extending beyond the perimeter of the platform;
clamping (540) the flexible film wiper and the deformable member with clamping members (104) disposed upon the deformable member, to apply a compressive force to the deformable member and the flexible film wiper; and
positioning (550) the platform within a rectangular enclosure of a powder-based 3-D printer, wherein the flexible film wiper provides a sliding seal against corresponding walls (109) of the rectangular enclosure, and wherein the deformable member applies sealing pressure to the flexible film wiper to increase a pressure of the sliding seal against the corresponding walls of the rectangular enclosure.

## Patentansprüche

1. System, das Folgendes umfasst:
eine bewegbare Plattformanordnung (100), die Folgendes umfasst:
eine rechteckige Plattform (101);
einen flexiblen Filmabstreifer (102), der an der rechteckigen Plattform angebracht und auf linearen Segmenten eines Umfangs der Plattform angeordnet ist, wobei sich der flexible Filmabstreifer über den Umfang hinaus erstreckt;
ein verformbares Element (103), das auf dem flexiblen Filmabstreifer angeordnet ist und sich über den Umfang der Plattform hinaus erstreckt, wobei das verformbare Element dazu dient, einen Dichtungsdruck auf den flexiblen Filmabstreifer auszuüben; und
Klemmelemente (104), die auf dem verformbaren Element angeordnet sind, um eine Druckkraft auf das verformbare Element und den flexiblen Filmabstreifer auszuüben; und
ein festes rechteckiges Gehäuse eines pulverbasierten 3D-Druckers, um die sich bewegende Plattformanordnung aufzunehmen, wobei der flexible Filmabstreifer dazu dient, eine Gleitdichtung gegen entsprechende Wände des rechteckigen Gehäuses bereitzustellen, wobei der flexible Filmabstreifer und das verformbare Element eine zweiteilige Dichtung zwischen der Plattform und dem Gehäuse bereitstellen.

2. System nach Anspruch 1, wobei eine Dicke des verformbaren Elements von dem Umfang der Plattform in Richtung einer Kante des verformbaren Elements abnimmt.

3. System nach Anspruch 1, wobei das verformbare Element eine Shorehärte in dem Bereich von ungefähr 20 bis ungefähr 60 aufweist.

4. System nach Anspruch 1, wobei das verformbare Element Eckelemente (105) umfasst, die dazu dienen, in direkter Berührung mit entsprechenden Ecken des rechteckigen Gehäuses zu stehen, wobei die Eckelemente Gleiteckendichtungen zwischen Ecken der rechteckigen Plattform und den entsprechenden Ecken des rechteckigen Gehäuses bereitstellen.

5. System nach Anspruch 4, wobei die Eckelemente Zugentlastungskerben (106) beinhalten, um die Eckelemente von linearen Segmenten des verformbaren Elements mechanisch zu isolieren.

6. System nach Anspruch 4, wobei die Eckelemente abgerundet sind.

7. System nach Anspruch 1, wobei der flexible Filmabstreifer ein reibungsarmes, nicht komprimierbares Material umfasst.

8. System nach Anspruch 7, wobei das reibungsarme, nicht komprimierbare Material eines von einem Polyimid, einem PEK-Polymer, Polytetrafluorethylen und einem aliphatischen oder halbaromatischen Polyamid umfasst.

9. System nach Anspruch 8, wobei eine Dicke des flexiblen Filmabstreifers in dem Bereich von ungefähr 0,05 mm bis ungefähr 0,3 mm liegt.

10. System nach Anspruch 1, wobei das verformbare Material eines von einem Silikon, einem Fluorelastomer und natürlichem oder synthetischem Kautschuk umfasst.

11. System nach Anspruch 1, wobei die rechteckige Plattform Führungsstifte und Gewindepfosten (107) umfasst, wobei der flexible Filmabstreifer und das verformbare Element Öffnungen, die den Führungsstiften und den Gewindepfosten entsprechen, beinhalten, wobei die Vorrichtung ferner Klemmstangen mit Öffnungen umfasst, um die Führungsstifte und die Gewindepfosten aufzunehmen, wobei die Klemmstangen dazu dienen, eine Klemmkraft auf das verformbare Element und den flexiblen Filmabstreifer bereitzustellen, wenn Muttern auf die Gewindepfosten geschraubt sind.

12. System nach Anspruch 1, wobei sich der flexible Filmabstreifer in einem nicht verformten Zustand um einen Abstand L über den Umfang der Plattform hinaus erstreckt und sich das verformbare Element auf eine Länge, die geringer als L ist, über den Umfang der Plattform hinaus erstreckt.

13. System nach Anspruch 12, wobei die Plattform durch einen Abstand L' von dem Gehäuse getrennt ist, wobei der Abstand L' geringer als der Abstand L in dem nicht verformten Zustand ist.

14. System nach Anspruch 13, wobei der Abstand L in der Größenordnung von ungefähr 4 mm bis ungefähr 10 mm liegt und der Abstand L' in der Größenordnung von ungefähr 2,5 mm liegt.

15. Verfahren (500), das Folgendes umfasst:
Bereitstellen (510) einer rechteckigen Plattform (101);
Hinzufügen (520) eines flexiblen Filmabstreifers (102) zu der rechteckigen Plattform, die auf linearen Segmenten eines Umfangs der Plattform angeordnet ist, wobei sich der flexible Filmabstreifer über den Umfang der Plattform hinaus erstreckt;
Hinzufügen (530) eines verformbaren Elements (103), das auf dem flexiblen Filmabstreifer angeordnet ist und sich über den Umfang der Plattform hinaus erstreckt;
Festklemmen (540) des flexiblen Filmabstreifers und des verformbaren Elements mit Klemmelementen (104), die auf dem verformbaren Element angeordnet sind, um eine Druckkraft auf das verformbare Element und den flexiblen Filmabstreifers auszuüben; und
Positionieren (550) der Plattform innerhalb eines rechteckigen Gehäuses eines pulverbasierten 3D-Druckers, wobei der flexible Filmabstreifer eine Gleitdichtung gegen entsprechende Wände (109) des rechteckigen Gehäuses bereitstellt und wobei das verformbare Element Dichtungsdruck auf den flexiblen Filmabstreifer ausübt, um einen Druck der Gleitdichtung gegen die entsprechenden Wände des rechteckigen Gehäuses zu erhöhen.

## Revendications

1. Système comprenant :
un ensemble plate-forme mobile (100), comprenant :
une plate-forme rectangulaire (101) ;
un racleur de film flexible (102) fixé à la plate-forme rectangulaire et disposé sur des segments linéaires d'un périmètre de la plate-forme, le racleur de film flexible s'étendant au-delà du périmètre ;
un élément déformable (103) disposé sur le racleur de film flexible et s'étendant au-delà du périmètre de la plate-forme, l'élément déformable étant destiné à appliquer une pression d'étanchéité au racleur de film flexible ; et
des éléments de serrage (104) disposés sur l'élément déformable pour appliquer une force de compression à l'élément déformable et au racleur de film flexible ; et
une enceinte rectangulaire fixe d'une imprimante 3D à base de poudre destinée à recevoir l'ensemble plate-forme mobile, le racleur de film flexible fournissant un joint coulissant contre les parois correspondantes de l'enceinte rectangulaire, le racleur de film flexible et l'élément déformable fournissant un joint à deux parties entre la plate-forme et l'enceinte.

2. Système selon la revendication 1, dans lequel une épaisseur de l'élément déformable diminue du périmètre de la plate-forme vers un bord de l'élément déformable.

3. Système selon la revendication 1, dans lequel l'élément déformable présente une dureté Shore dans la plage d'environ 20 à environ 60.

4. Système selon la revendication 1, dans lequel l'élément déformable comprend des éléments de coin (105) destinés à être en contact direct avec les coins correspondants de l'enceinte rectangulaire, les éléments de coin étant destinés à fournir des joints de coin coulissants entre les coins de la plate-forme rectangulaire et les coins correspondants de l'enceinte rectangulaire.

5. Système selon la revendication 4, dans lequel les éléments d'angle comportent des crans réducteurs de tension (106) pour isoler mécaniquement les éléments d'angle des segments linéaires de l'élément déformable.

6. Système selon la revendication 4, dans lequel les élément de coin sont arrondis.

7. Système selon la revendication 1, dans lequel le racleur film flexible comprend un matériau à faible friction et non compressible.

8. Système selon la revendication 7, dans lequel le matériau non compressible à faible friction comprend un polyimide, un polymère PEK, un polytétrafluoroéthylène ou un polyamide aliphatique ou semi-aromatique.

9. Système selon la revendication 8, dans lequel une épaisseur du racleur de film flexible est dans la plage d'environ 0,05 mm à environ 0,3 mm.

10. Système selon la revendication 1, dans lequel le matériau déformable comprend du silicone, un fluoroélastomère ou du caoutchouc naturel ou synthétique.

11. Système selon la revendication 1, dans lequel la plate-forme rectangulaire comprend des broches de guidage et des montants filetés (107), dans lequel le racleur de film flexible et l'élément déformable comportent des ouvertures correspondant aux broches de guidage et aux montants filetés, l'appareil comprenant en outre des barres de serrage avec des ouvertures pour recevoir les broches de guidage et les montants filetés, les barres de serrage étant destinées à fournir une force de serrage à l'élément déformable et au racleur de film flexible lorsque des écrous sont filetés sur les montants filetés.

12. Système selon la revendication 1, dans lequel le racleur de film flexible à l'état non déformé s'étend sur une distance L au-delà du périmètre de la plate-forme et l'élément déformable s'étend sur une longueur inférieure à L au-delà du périmètre de la plate-forme.

13. Système selon la revendication 12, dans lequel la plate-forme est séparée par une distance L' de l'enceinte, la distance L' étant inférieure à la distance L à l'état non déformé.

14. Système selon la revendication 13, dans lequel la distance L est de l'ordre d'environ 4 mm à environ 10 mm et la distance L' est de l'ordre d'environ 2,5 mm.

15. Procédé (500) comprenant :
la fourniture (510) d'une plate-forme rectangulaire (101) ;
l'ajout (520) d'un racleur de film flexible (102) à la plate-forme rectangulaire, disposé sur des segments linéaires d'un périmètre de la plate-forme, le racleur de film flexible s'étendant au-delà du périmètre de la plate-forme ;
l'ajout (530) d'un élément déformable (103) disposé sur le racleur de film flexible et s'étendant au-delà du périmètre de la plate-forme ;
le serrage (540) du racleur de film flexible et de l'élément déformable au moyen d'éléments de serrage (104) disposés sur l'élément déformable, pour appliquer une force de compression à l'élément déformable et au racleur de film flexible ; et
le positionnement (550) de la plate-forme à l'intérieur d'une enceinte rectangulaire d'une imprimante 3D à base de poudre, dans lequel le racleur de film flexible fournit un joint coulissant contre les parois correspondantes (109) de l'enceinte rectangulaire, et dans lequel l'élément déformable applique une pression d'étanchéité sur le racleur de film flexible pour augmenter une pression du joint coulissant contre les parois correspondantes de l'enceinte rectangulaire.
